# FASCICULE DE BREVET EUROPEEN

(11) **EP 2 002 376 B1**
(45) Date de publication et mention de la délivrance du brevet: **09.06.2010**
(21) Numéro de dépôt: 07735259.9
(22) Date de dépôt: 26.03.2007
(51) Int. Cl.: G06K 19/07, G06K 7/00, H04W 12/06

(54) **Procédé d'allocation dynamique des contacts d'une carte à puce d'abonné dans un terminal mobile, ainsi que programme et terminal mobile correspondants**
Verfahren zur dynamischen Zuweisung von Kontakten einer Teilnehmer-Chipkarte in einem mobilen Endgerät sowie entsprechendes Programm und mobiles Endgerät
Method of dynamically allocating contacts of a subscriber chip card in a mobile terminal, and corresponding program and mobile terminal

(30) Priorité: 05.04.2006 FR 0651206
(43) Date de publication de la demande: 17.12.2008
(73) Titulaire: NXP B.V., 5656 AG Eindhoven (NL)
(72) Inventeur: MOREL, Thierry, F-75015 Paris (FR); KERDRAON, Alan, F-75015 Paris (FR); BRIOT, Olivier, F-75015 Paris (FR); MAUGARS, Philippe, A-1102 Vienna (AT)
(74) Mandataire: Desormiere, Pierre-Louis
(86) Numéro de dépôt international: PCT/IB2007/051052
(87) Numéro de publication internationale: WO 2007/113729

(56) Documents cités:
- WO-A-2006/111781
- WO-A1-01/06443
- FR-A- 2 844 078
- US-A- 5 847 372
- US-B1- 6 439 464

## Description

### Domaine de l'invention

La présente invention se rapporte au domaine de la téléphonie mobile et, plus particulièrement, à l'architecture fonctionnelle d'un terminal mobile et à la gestion des contacts de la carte à puce d'abonné présente dans le terminal.

### Art antérieur

Un téléphone mobile est composé de plusieurs éléments (clavier/écran, micro/haut-parleur, élément de radiocommunication (par exemple de type GSM), etc.) dédiés aux différentes fonctions offertes à l'utilisateur. Parmi ces différents éléments, on trouve la carte à puce d'abonné ("Smart Card"), connue sous le nom de carte SIM (pour "Subscriber Identity Module") ou carte USIM (pour "Universal Subscriber Identity Module" encore appelée carte UICC pour "UMTS Integrated Circuit Card").

La carte à puce d'abonné est l'élément de sécurité du téléphone mobile distribué par les opérateurs de téléphonie mobile qui en sont les "émetteurs" ("card issuer"). Cette carte contient des moyens de traitement (microcontrôleur) et des moyens de mémorisation. Typiquement, cette carte matérialise l'abonnement téléphonique au sein du téléphone mobile en amenant dans ce dernier les données propres à chaque abonné et en permettant des mécanismes d'authentification avec le réseau de l'opérateur. Elle permet également d'authentifier le porteur du mobile dans le cas où le "code PIN" est activé. Sur les cartes à puce d'abonné actuelles, les contacts inutilisés sont au nombre de trois. II s'agit des contacts C4, C6 et C8 définis selon la norme ISO 7816-2.

Les opérateurs de téléphonie mobile envisagent actuellement de simplifier le déploiement de leurs services en l'effectuant très simplement par le biais de cartes à puce d'abonné qui ne contiendraient plus seulement les données/algorithmes d'abonnement mais également des données et des applications permettant une personnalisation d'un téléphone propre à l'opérateur dès l'insertion de ladite carte dans le téléphone. II est également prévu de simplifier le changement de téléphone pour un abonné, la quasi-totalité de ses données importantes (répertoire de grande capacité, MMS, photos..) pouvant être contenues dans ces cartes à puce de nouvelle génération. Pour disposer d'une qualité de service satisfaisante, il est nécessaire de doter la carte à puce d'abonné d'une nouvelle interface de communication à très grande vitesse, dite HSP (pour "High Speed Protocol"), pour la communication entre le processeur d'application du téléphone mobile et la carte à puce d'abonné. Ce protocole peut être par exemple le protocole USB ("Universal Serial Bus") qui nécessite 2 contacts électriques ou le protocole MMC ("Multi Media Card") qui lui en exige 3.

Par ailleurs, les opérateurs de téléphonie mobile envisagent également de proposer des services NFC à leurs clients. Pour cela, les téléphones mobiles sont dotés d'une antenne dédiée (également appelée bobine) qui est intégrée dans le capot du mobile et est raccordée à un module électronique de communication de proximité permettant la mise en oeuvre de la technologie NFC ("Near Field Communication" ou communication en champ proche).

Ce module électronique NFC comprend notamment un modem NFC tel que le PN 531 TAMA de la société Philips™ qui gère l'interface analogique sans contact. Parmi les différents modes de fonctionnement permis par la technologie NFC, le mode dit "émulation de carte" implique notamment la mise en oeuvre d'un composant supplémentaire dit de sécurité (Security Element) qui est raccordé au modem NFC et qui suivant les cas peut être implémenté par un composant dédié au NFC comme par exemple le circuit Smart MX de la société Philips™, ou par la carte à puce d'abonné sous réserve que celle-ci soit dotée d'une nouvelle interface de communication avec le modem NFC.

Ce composant de sécurité NFC est apte à stocker des données et à en contrôler l'accès et la diffusion (identification/authentification, cryptage) en particulier via l'interface de communication NFC.

En mode "émulation de carte", un téléphone mobile NFC peut stocker et gérer un ensemble de cartes virtuelles permettant d'accéder à différents services tels que, par exemple, des services de paiements électroniques sécurisés, d'ouvertures de portes ou de barrières.

Le terminal remplace alors les cartes physiques, avec ou sans contact, habituellement utilisées. Pour utiliser le service, l'utilisateur approche son téléphone mobile doté d'une puce NFC d'un lecteur de puce NFC (ou d'un PCD pour "Proximity Coupling Device" dans le cas où l'infrastructure est déjà existante comme pour les cartes sans contact dans le transport urbain) qui correspond au service que l'on souhaite utiliser (terminal de paiement, borne d'accès, etc.).

A cet effet et dans le cas où l'élément de sécurité NFC est implémenté dans la carte à puce d'abonné, il s'avère nécessaire d'héberger de nouveaux secrets et algorithmes dans ladite carte à puce d'abonné. En outre, la mise en place d'une nouvelle interface de communication est aussi nécessaire pour permettre l'échange de données entre la carte à puce d'abonné et le modem NFC qui gère l'interface analogique sans contact. Parmi les différents protocoles développés par l'industrie, certains nécessitent 2 contacts (par exemple le protocole/interface S2C de la société Philips™) et d'autres 1 seul (par exemple le protocole SWP ("Single Wire Protocol") décrit par la société Axalto).

Le nombre de contacts de la carte à puce d'abonné (carte SIM/USIM/UICC) étant limité à 8 (parmi lesquels 3 sont encore non utilisés), les possibilités d'évolution requérant l'utilisation de contacts de la carte seront rapidement limitées.

La technique dite du multiplexage est un procédé connu qui permet de regrouper, sur une voie unique, des signaux ou des informations issus de plusieurs voies (effectué grâce à un multiplexeur) et ayant éventuellement des destinations finales différentes. Cependant, ce mécanisme oblige à "étiqueter" les données multiplexées avec un identifiant de destinataire pour pouvoir ensuite les relire et attribuer les bonnes données à chacun. En outre, la technique du multiplexage est consommatrice en ressources logicielles et matérielles et ne semble pas adaptée à des environnements aussi contraignants qu'un téléphone mobile et surtout qu'une carte à puce d'abonné.

La solution actuellement envisagée pour concilier une communication entre, d'une part, la carte à puce d'abonné avec ses 8 contacts existants et, d'autre part, un processeur d'application utilisant un protocole HSP et un module NFC utilisant un autre protocole, consiste à implémenter une liaison USB (version "Interchip") pour le protocole HSP, à savoir à utiliser 2 fils, et une interface sur un fil pour le NFC. Cette solution permet à la fois au processeur d'application et au module NFC d'échanger des données avec la carte à puce d'abonné.

Toutefois, cette solution pose des problèmes de mise en oeuvre. En effet, les ports de type USB "Interchip" ne sont pas encore présents dans les terminaux mobiles, ce qui soulève des problèmes d'implémentation. Par ailleurs, l'interface avec le modem NFC (par exemple interface S2C) est plus complexe à mettre en oeuvre sur un fil que sur deux.

Enfin, cette solution nécessite d'utiliser d'une manière permanente et figée les contacts encore libres sur la carte à puce d'abonné bloquant ainsi toute possibilité d'évolution future dans l'utilisation de la carte.

Le document US 5 847 372 divulgue une carte à puce comprenant deux microcontrôleurs et une unité de connexion permettant de connecter alternativement l'un ou l'autre des microcontrôleurs à un dispositif de lecture/écriture externe.

Le document WO 01/06443 décrit un appareil réalisant une interface pour des cartes à puce de deux types différents, à savoir du type ISO/7816 et du type NRSS.

### Objet et description succincte de l'invention

Pour pallier ces inconvénients, la présente invention propose une solution qui permet d'allouer dynamiquement les contacts d'une carte à puce d'abonné entre plusieurs modules du terminal mobile et permettre ainsi au terminal mobile d'utiliser alternativement les capacités de la carte à puce d'abonné.

A cet effet, l'invention propose un procédé d'allocation de contact d'une carte à puce d'abonné tel que défini dans la revendication 1.

Ainsi, l'invention permet de mettre en oeuvre une gestion dynamique des contacts de la carte à puce d'abonné. En effet, un même contact de la carte à puce peut être utilisé pour échanger des données avec plusieurs modules électroniques. De cette manière, l'ajout d'un module électronique nécessitant une communication avec la carte à puce d'abonné n'implique pas une occupation permanente d'un ou plusieurs contacts de la carte, ce qui permet d'avoir une configuration évolutive de la carte et de rajouter d'autres modules électroniques même lorsque les modules déjà présents utilisent tout ou partie des contacts disponibles de la carte.

Selon un aspect de l'invention, la carte à puce d'abonné reçoit en outre une commande pour utiliser une interface de communication correspondant au protocole de communication du module électronique à connecter avec ladite carte. Ainsi, lorsque les modules électroniques utilisent des protocoles de communication différents, la carte à puce réalise une gestion dynamique d'interfaces pour utiliser l'interface adaptée au module en liaison avec celle-ci.

Pour connecter sélectivement les premier et deuxième modules électroniques à ladite carte, on utilise de préférence, les trois contacts correspondant à des contacts non utilisés de la carte à puce d'abonné (contacts C4, C6 et C8 définis dans la norme ISO 7816-2).

Selon un mode de réalisation, le premier module électronique est un processeur d'application utilisant un premier protocole de communication à très grande vitesse sur au moins deux fils et le deuxième module électronique est un module de communication de proximité NFC utilisant un deuxième protocole de communication sur au moins un fil, au moins un contact de la carte à puce d'abonné étant sélectivement connecté audit processeur ou audit module.

Par conséquent, grâce à la gestion dynamique de l'allocation des contacts de la carte à puce selon l'invention, il est possible d'implémenter dans un même terminal mobile un processeur d'application et un module NFC en n'utilisant que 2 contacts de la carte à puce d'abonné.

Lorsque le processeur d'application utilise un protocole de communication de type MMC transmettant des données sur un premier et un deuxième contacts de la carte à puce d'abonné ainsi qu'un signal d'horloge sur un troisième contact de ladite carte, la carte à puce d'abonné réagit à une variation du rapport cyclique du signal d'horloge transmis sur le troisième contact en utilisant l'interface de communication correspondant au protocole de communication du module de communication de proximité NFC.

Ainsi, même lorsque les trois contacts non utilisés de la carte sont occupés par la communication MMC, il est toujours possible d'indiquer à la carte une commutation entre le processeur d'application et le module NFC et permettre l'échange de données avec le module NFC.

La présente invention concerne également un dispositif de commutation programmable dans un terminal mobile tel que défini dans la revendication 6.

Ce dispositif placé entre les modules électroniques et la carte à puce d'abonné permet de contrôler la connexion alternative des modules sur les contacts de la carte et, par conséquent, de permettre à un même contact d'échanger des signaux/données avec plusieurs modules alternativement.

Le dispositif comprend en outre des moyens pour envoyer sur un contact de la carte à puce d'abonné un signal de commande indiquant l'interface de communication à utiliser et correspondant au protocole de communication du module électronique à connecter avec la carte à puce d'abonné.

Le dispositif est de préférence relié à trois contacts de la carte à puce d'abonné correspondant à des contacts non utilisés de ladite carte.

L'invention concerne aussi un programme embarqué (logique programmable) pour un dispositif de commutation programmable tel que défini dans la revendication 9.

Grâce à ce programme, le dispositif de commutation peut être configuré pour gérer l'allocation des contacts de la carte en fonction des modules électroniques incorporés dans le terminal mobile. La configuration du dispositif de commutation est alors dynamique et peut être adaptée à tout moment.

La présente invention concerne enfin un terminal mobile comprenant une carte à puce d'abonné telle que décrite précédemment, et au moins un premier et un deuxième modules électroniques aptes à communiquer avec la carte à puce d'abonné suivant respectivement un premier et un deuxième protocoles de communication, ledit terminal comprenant en outre un dispositif de commutation programmable tel que défini précédemment.

On dispose ainsi d'un terminal mobile capable d'accueillir plusieurs modules électroniques nécessitant chacun l'utilisation d'un ou plusieurs contacts de la carte à puce d'abonné sans avoir à occuper de façon permanente les contacts de la carte et sans recourir à la technique de multiplexage.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique de l'architecture fonctionnelle d'un terminal mobile conformément à un mode de réalisation de l'invention,
- la figure 2 représente une architecture fonctionnelle d'une carte à puce d'abonné conformément à un mode de réalisation de l'invention,
- la figure 3 est un ordinogramme d'un mode de mise en oeuvre d'un procédé d'allocation de contacts de carte à puce d'abonné dans l'architecture de la figure 1,
- la figure 4 est une vue schématique de l'architecture fonctionnelle d'un terminal mobile conformément à un autre mode de réalisation de l'invention,
- la figure 5 est un ordinogramme d'un mode de mise en oeuvre d'un procédé d'allocation de contacts de carte à puce d'abonné dans l'architecture de la figure 4,
- la figure 6 est un diagramme montrant un exemple de variation de rapport cyclique dans un signal d'horloge selon le protocole MMC.

### Description détaillée des modes de réalisation de l'invention

La présente invention s'applique à tout type de terminal mobile (téléphone mobile, PDA communiquant, Smart phone etc.) fonctionnant avec une carte à puce d'abonné.

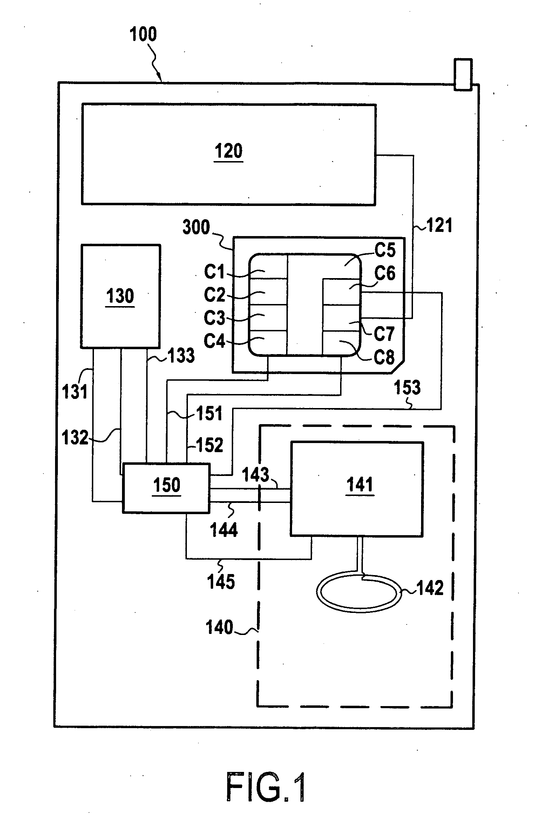

La figure 1 illustre une architecture fonctionnelle d'un terminal mobile 100 dans laquelle l'invention peut être mise en oeuvre conformément à un mode de réalisation.

Sur la figure 1, le terminal mobile, ici un téléphone mobile 100, comprend une carte à puce d'abonné 300, un processeur de bande de base 120 (DBB "Digital BaseBand") permettant l'envoi/réception de données/voix sur le réseau de téléphonie mobile (GSM/GPRS), un processeur d'application 130, un module de communication de proximité NFC 140 et contrôleur de commutation 150.

Par soucis de simplification, les autres éléments logiciels/matériels bien connus dans un téléphone mobile (interface utilisateur (clavier, écran, micro, haut-parleur, système d'exploitation, etc.) n'ont pas été représentés sur la figure 1.

La carte à puce d'abonné 300 (carte SIM (pour "Subscriber Identity Module")) ou carte USIM (pour "Universal Subscriber Identity Module" encore appelée carte UICC pour "UMTS Integrated Circuit Card") comprend typiquement 8 contacts C1 à C8 dont l'attribution, selon la norme ISO 7816-2 est définie de la façon suivante :
- C1= Alimentation circuit carte (VCC);
- C2 = Initialisation (Reset);
- C3 = Horloge (CLK);
- C4 = Réservé pour usage futur (RFU), non utilisé;
- C5 = Masse (GND);
- C6 = Tension de reprogrammation (Ecriture EEPROM), non utilisé;
- C7 = Liaison série entrée/sortie (I/O ISO 7816);
- C8 = Réservé pour usage futur (RFU), non utilisé.

Le processeur de bande de base 120 est relié au contact C7 de la carte à puce d'abonné par une liaison 121.

Les trois contacts qui ne sont pas actuellement utilisés sur la carte sont les contacts C4, C6 et C8.

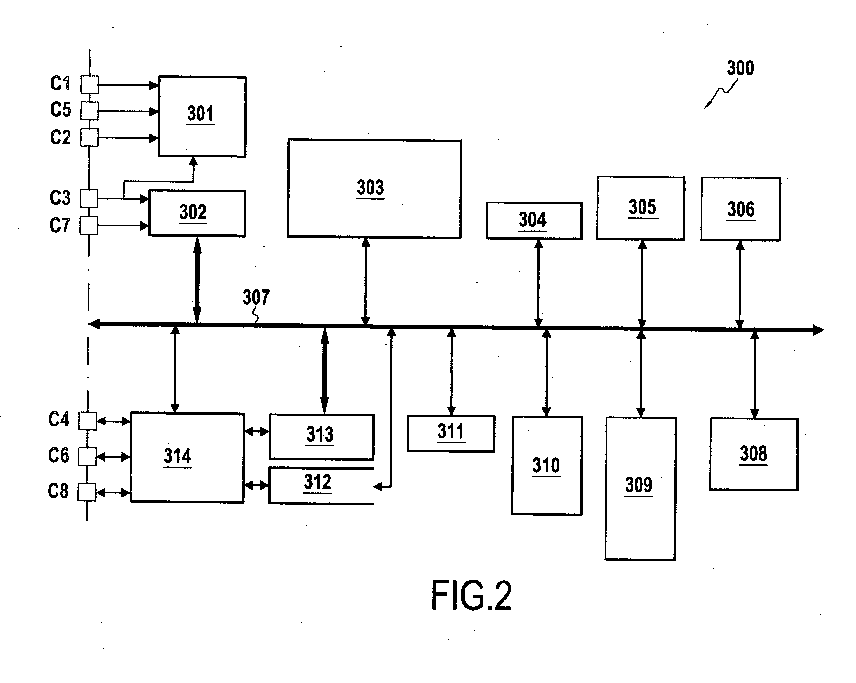

La figure 2 représente une architecture fonctionnelle d'une carte à puce d'abonné 300 permettant la mise en oeuvre de l'invention dans le terminal de la figure 1.

La carte à puce d'abonné 300 comprend:
- un gestionnaire d'horloge et d'alimentation 301 relié aux contacts C1, C2, C3 et C5,
- un contrôleur de port série UART 302 ("Universal Asynchronous Receiver-Transmitter) relié aux contacts C3 et C7,
- un processeur 303 (processeur 32 bits),
- un chronomètre 304,
- un accélérateur de chiffrement 305,
- un contrôleur de sécurité 306,
- un générateur de nombre aléatoire 308,
- une mémoire haute densité 309,
- une mémoire vive RAM 310,
- une mémoire statique ROM 311,
- une interface NFC 312 (par exemple interface S2C),
- une interface très grande vitesse HSP 313 (pare exemple USB ou MMC), et
- un commutateur d'interface 314 relié aux contacts C4, C6 et C8.

Tous ces éléments peuvent échanger des données entre eux via un bus 307.

Conformément à l'invention et comme décrit plus loin en détails, le commutateur d'interface 314 permet de commuter un ou plusieurs des contacts C4, C6 et C8 alternativement sur l'interface NFC 312 et sur l'interface très grande vitesse HSP 313 en fonction d'une commande de configuration d'interface envoyée par le contrôleur de commutation 150. Le commutateur d'interface 314 peut être implémenté dans un circuit de type ASIC ("Application-Specific Integrated Circuit") relativement simple.

Sur la figure 1, le module de communication de proximité NFC 140 est formé, de façon connue, d'une puce contenant un circuit électronique 141 reliée à une antenne NFC 142. Le circuit 141 est un modem NFC prenant en charge l'interface analogique NFC ainsi qu'une interface de communication avec le téléphone mobile. Le composant de sécurité NFC qui, ici est implémenté dans la carte à puce d'abonné, comprend une mémoire de stockage et des moyens de traitement (par exemple la mémoire haute densité 309 et le processeur 303 de la carte) spécifiquement programmés pour réaliser notamment des fonctions de sécurisation d'échange d'informations numériques tel que des fonctions de cryptographie, de vérification de code confidentiel, de vérification signature électronique, etc.

Le circuit 141 comprend des composants analogiques qui permettent de façon connue d'envoyer/recevoir les données numériques contenues ou générées par la carte à puce d'abonné via l'antenne 142.

La structure et le fonctionnement du module de communication de proximité NFC est basé en partie sur celui des cartes sans contact bien connues (cf. norme de communication de proximité ISO 14443). La technologie NFC permet à l'utilisateur d'accéder à des services sans fil ou à échanger de l'information rien qu'en approchant son terminal mobile d'autres appareils compatibles NFC (c'est-à-dire équipé de lecteur NFC ou équipé de Proximity Coupling Device compatibles avec la norme ISO 14443 pour le mode NFC dit "émulation de carte"), comme des bornes interactives par exemple. La technologie NFC se distingue par sa vitesse de transmission élevée (jusqu'à 424 Kbit/s) et son faible coût.

Le contrôleur de commutation 150 qui est un élément propre à l'invention est formé, par exemple, par un microcontrôleur spécifiquement programmé pour réaliser, comme expliqué en détails ci-après, une commutation alternative entre, d'une part, la carte à puce d'abonné 300 et, d'autre part, le processeur d'application 130 ou le module NFC 140. Un composant du commerce tel que le microcontrôleur 80C51 de la société Philips™ est tout à fait adapté à la mise en oeuvre du contrôleur de commutation 150. Dans la mesure où notamment certains modems NFC comprennent déjà un microcontrôleur, le contrôleur de commutation pourra être, dans ce cas, mis en oeuvre directement dans le modem NFC en programmant dans son microcontrôleur une fonction supplémentaire de commutation.

A cet effet, le contrôleur de commutation 150 est relié au processeur d'application 130 par trois liaisons 131 à 133 et au module NFC 140 par trois liaisons 143 à 145. Le contrôleur de commutation 150 est en outre relié aux trois contacts C4, C6 et C8 de la carte à puce d'abonné 300 respectivement par des liaisons 151, 153 et 152. Les liaisons 151 et 152 sont réservées pour l'échanges de données entre la carte 300 et le processeur d'application 130 ou le module NFC 140 tandis que la liaison 153 est réservée pour envoyer des commandes de configuration d'interface à la carte 300 lors des commutations comme décrits ci-après.

Dans le mode de réalisation de la figure 1, il est prévu d'utiliser deux fils pour la communication à très grande vitesse HSP entre le processeur d'application 130 du téléphone mobile et la carte à puce d'abonné 300, en utilisant par exemple le protocole USB ("Universal Serial Bus"). De même, il est prévu d'utiliser deux fils pour la communication entre le module NFC 140 et la carte à puce d'abonné 300, en utilisant par exemple le protocole NFC S2C. Dans ce cas, l'interface NFC 312 et l'interface très grande vitesse HSP 313 de la carte 300 correspondent respectivement à une interface NFC S2C et une interface USB pour permettre aux contacts C4 et C8 de supporter alternativement des communications suivant le protocole S2C et le protocole USB.

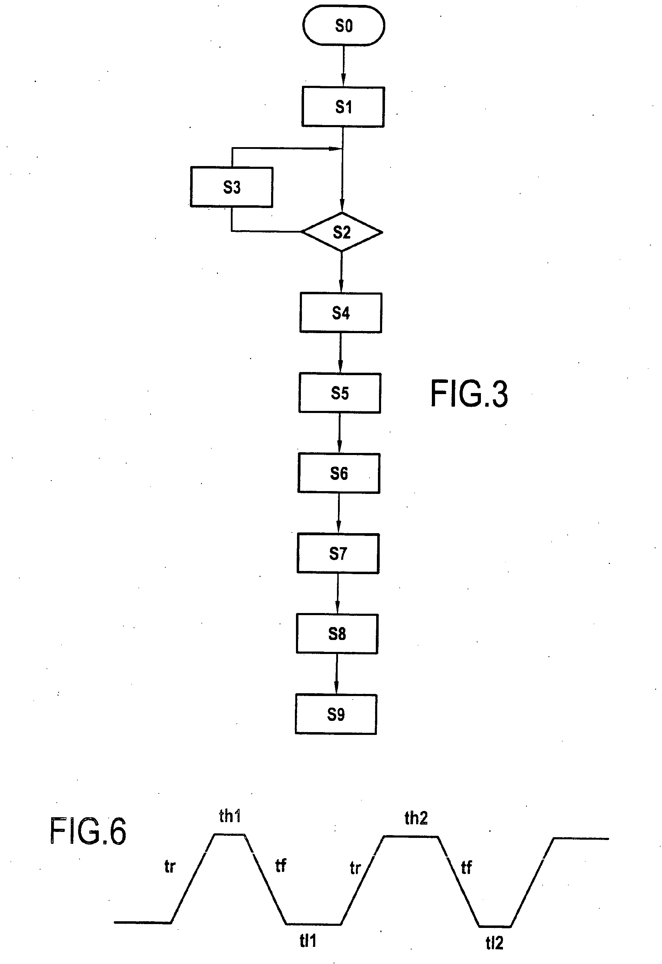

La figure 3 illustre les étapes réalisées lors d'une opération de commutation conformément à un mode de réalisation de l'invention.

Par défaut (étape S0), le téléphone mobile 100 est en mode "sans contact", c'est-à-dire que les contacts C4 et C8 de la carte à puce d'abonné 300 sont raccordés par défaut au modem NFC du module NFC 140 par le contrôleur de commutation 150. En effet, le module NFC 140 exigeant des temps de réponse très courts (inférieur à 140 ms dans le cas d'un badge de métro), il est préférable d'avoir le téléphone mobile en mode sans contact par défaut.

Dès que le processeur d'application 130 veut communiquer avec la carte 300, il transmet une requête au contrôleur de commutation 150 via la liaison 133 (étape S1). Le contrôleur vérifie alors qu'aucune transaction en mode sans contact n'est en cours (étape S2). Si c'est le cas, le contrôleur attend la fin de la transaction (étape S3). S'il n'y a pas de transaction sans contact en cours ou lorsque celle-ci est terminée, le contrôleur 150 met en liaison le processeur d'application avec la carte (commutation liaisons 131 avec 151 et 132 avec 152) et transmet au contact C6 via la liaison 153 une commande de configuration d'interface (étape S4) à laquelle la carte à puce d'abonné 300 réagit en se plaçant en mode "interface rapide", c'est-à-dire en utilisant son interface USB sur les contacts C4 et C8 (étape S5). Plus précisément, lorsque le commutateur d'interface 314 reçoit la commande de configuration d'interface, il commute les contacts C4 et C8 sur l'interface très grande vitesse HSP 313 qui utilise le protocole USB.

Une fois ces opérations effectuées, le contrôleur 150 envoie, via la liaison 133, une information indiquant que la carte à puce d'abonné est prête à échanger des données (étape S6) au processeur d'application qui va envoyer/recevoir ses données via le bus USB formé par les liaisons 131, 132 et 151, 152 (étape S7).

Dès que le processeur d'application 130 a terminé ses échanges, il envoie un nouveau message au contrôleur de commutation 150 via la liaison 133 (étape S8) qui remet alors la carte à puce d'abonné dans le mode sans contact, c'est-à-dire en commutant les liaisons 151, 152 avec les liaisons 143, 144 respectivement et en envoyant, via la liaison 153, une commande de configuration d'interface à laquelle réagit la carte 300 en utilisant son interface S2C sur les contacts C4 et C8 (étape S9). Plus précisément, lorsque le commutateur d'interface 314 reçoit la commande de configuration d'interface, il commute les contacts C4 et C8 sur l'interface NFC 312 qui utilise le protocole S2C.

Dans le cas où une transaction en mode sans contact s'initialise (détection de champ) alors que le processeur d'application est connecté à la carte à puce d'abonné, le modem NFC envoie, via la liaison 145, une demande d'interruption au contrôleur de commutation qui interrompt la communication entre la carte et le processeur d'application (en relayant le message d'interruption vers le processeur d'application) et qui place la carte à puce d'abonné dans le mode sans contact (de la même façon que dans l'étape S9). Le processeur d'application pourra redemander la main par la suite (répétition des étapes S1 à S7).

Cette solution combinée avec des mémoires tampon ("buffers") de taille suffisante (maximum 1 Mo) du côté du processeur d'application permet de répondre à tous les cas de figure et ce de manière totalement transparente pour l'utilisateur du téléphone mobile, d'autant plus que les transactions en mode sans contact sont extrêmement rapides et que la durée d'interruption sera donc très courte.

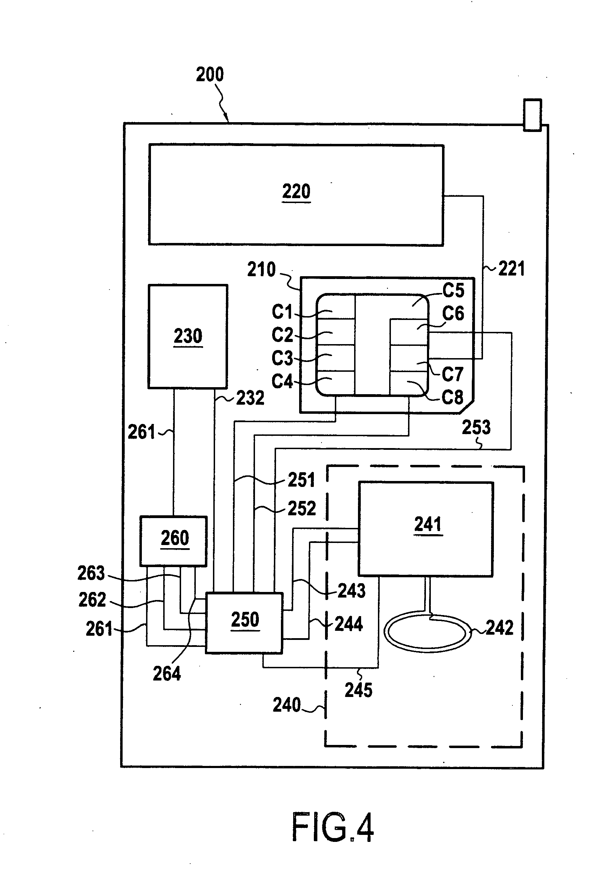

On décrit maintenant un autre exemple de mise en oeuvre de la présente invention conformément à un autre mode de réalisation illustré en figure 4. L'architecture du téléphone mobile 200 diffère de celle représentée en figure 1 en ce qu'elle comprend en outre un pilote MMC 260 pour réaliser des échanges de données avec le processeur d'application 230 suivant le protocole MMC ("Multi Media Card"). Les autres éléments du téléphone mobile 200 (carte à puce d'abonné 210, processeur de bande de base 220, processeur d'application 230, module NFC 240, contrôleur de commutation 250) sont similaires à ceux du téléphone mobile 100 de la figure 1 et ne seront pas décrits une nouvelle fois par souci de simplification. On notera toutefois que dans ce mode de réalisation, puisque la communication entre la carte à puce d'abonné 210 et le processeur d'application 230 est réalisée suivant le protocole MMC et non USB, la carte 210 contient une interface MMC à la place de l'interface USB. Ce protocole nécessitant l'utilisation de trois fils (deux pour les signaux de données et un pour le signal d'horloge), le pilote MMC 260 est relié au contrôleur de commutation 250 par trois liaisons 261, 262 et 263. Conformément au protocole MMC, les données "signal Data de MMC" et "signal CMD de MMC" sont respectivement envoyées sur deux fils, ici les liaisons 261 et 262, avec un signal d'horloge CLX sur le troisième fil, ici la liaison 263. En mode interface rapide, les données "signal Data de MMC" sont échangées sur le contact C4 de la carte 210 via la liaison 251 et les données "signal CMD de MMC" sont échangées sur le contact C8 de la carte 210 via la liaison 252, tandis que le signal d'horloge CLX est quant à lui transmis à la carte 210 sur le contact C6 via la liaison 253.

L'architecture fonctionnelle de la carte à puce d'abonné 210 est similaire à celle de la carte 300 représentée en figure 2, à l'exception du commutateur d'interface qui comprend en outre un détecteur de variation de rapport cyclique (fonction programmée dans le commutateur) pour détecter un changement de rapport cyclique sur le contact C6 et gérer la commutation de l'interface très grande vitesse HSP 313 qui correspond ici à une interface MMC.

Une liaison supplémentaire 264 est prévue entre le contrôleur 250 et le pilote MMC 260 pour permettre l'envoi de requête d'interruption à ce dernier.

Par ailleurs, le contrôleur de commutation 250 est ici programmé pour commuter les trois liaisons 261 à 263 respectivement avec les trois liaisons 251 à 253 en mode interface rapide et pour relayer les requêtes d'interruptions envoyées par le module NFC au pilote MMC, via les liaisons 245 et 264, lors d'une demande de passage en mode sans contact.

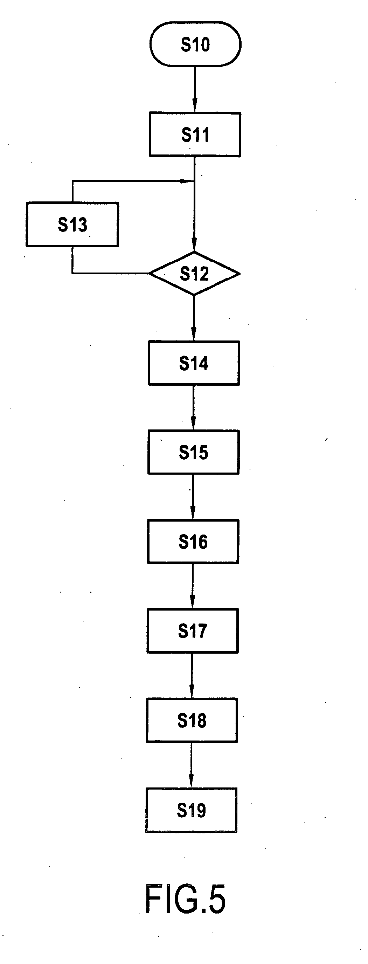

La figure 5 illustre les étapes réalisées lors d'une opération de commutation mise en oeuvre dans l'architecture de la figure 4 conformément à un mode de réalisation de l'invention.

Par défaut (étape S10), le téléphone mobile 200 est en mode "sans contact", c'est-à-dire que les contacts C4 et C8 de la carte à puce d'abonné 210 sont raccordés par défaut au modem NFC du module NFC 240 par le contrôleur de commutation 250. En effet, le module NFC 240 exigeant des temps de réponse très courts (inférieur à 140 ms dans le cas d'un badge de métro), il est préférable d'avoir le téléphone mobile en mode sans contact par défaut.

Dès que le processeur d'application 230 veut communiquer avec la carte 210, il transmet une requête au contrôleur de commutation 250 via la liaison 232 (étape S11). Le contrôleur vérifie alors qu'aucune transaction en mode sans contact n'est en cours (étape S12). Si c'est le cas, le contrôleur attend la fin de la transaction (étape S13).

S'il n'y a pas de transaction sans contact en cours ou lorsque celle-ci est terminée, le contrôleur 250 transmet au contact C6 via la liaison 253 une commande de configuration d'interface (étape S14) à laquelle la carte à puce d'abonné 210 réagit en se plaçant en mode "interface rapide" MMC. Plus précisément, lorsque le commutateur d'interface 314 reçoit la commande de configuration d'interface, il commute les contacts C4, C6 et C8 sur l'interface très grande vitesse HSP 313 qui utilise ici le protocole MMC. Le contrôleur 250 met en liaison, via le pilote MMC 260, le processeur d'application 230 avec la carte 210 en commutant la liaison 261 avec la liaison 251, la liaison 262 avec la liaison 252 et la liaison 263 avec la liaison 253 (étape S15). Une fois ces opérations effectuées, le contrôleur 250 envoie, via la liaison 232, une information indiquant que la carte à puce d'abonné est prête à échanger des données (étape S16) au processeur d'application 230 qui va envoyer/recevoir ses données suivant le protocole MMC et via le bus formé par les liaisons 261 à 263 et 251 à 253 (étape S17).

Dès que le processeur d'application 230 a terminé ses échanges, il envoie un nouveau message au contrôleur de commutation 250 via la liaison 232 (étape S18) qui remet alors la carte à puce d'abonné dans le mode sans contact (i.e. en commutant les liaisons 251, 252 avec les liaisons 243, 244 respectivement et en envoyant, via la liaison 253, une commande de configuration d'interface à laquelle réagit le commutateur d'interface de la carte 210 en commutant l'interface NFC utilisant le protocole S2C sur les contacts C4 et C8) (étape S19).

Lorsque la carte à puce d'abonné 210 échange des données avec le processeur d'application 230 suivant le protocole MMC en mode interface rapide (étape S17), le contact C6 est utilisé par le signal d'horloge CLX du protocole MMC. Il est donc nécessaire de définir un mécanisme approprié pour que la carte à puce d'abonné 210 puisse repasser en mode sans contact en cas de besoin.

Dans le cas où une transaction en mode sans contact s'initialise (détection de champ) alors que le processeur d'application 230 est connecté à la carte à puce d'abonné 210, le modem NFC 240 envoie, par la liaison 245, une demande d'interruption au pilote MMC 260 transitant par le contrôleur de commutation 250 qui la transmet au pilote MMC via la liaison 264.

Dès réception, de la demande d'interruption, le pilote MMC 260 modifie le rapport cyclique du signal d'horloge (CLX) et arrête d'envoyer les donnés sur les contacts C4 (signal Data de MMC) et C8 (Signal CMD de MMC). Le commutateur d'interface de la carte à puce d'abonné est programmé pour détecter des changements dans le rapport cyclique du signal d'horloge et pour passer en mode sans contact lors de la détection d'un tel changement, c'est-à-dire pour commuter les contacts C4 et C6 sur l'interface NFC utilisant le protocole S2C.

Par exemple, comme illustré sur la figure 6, pour un signal d'horloge MMC à 20MHz les valeurs suivantes sont permises par la norme MMC: un premier cycle avec tr=10ns, th1=10ns, tf=10ns, tl1=20ns (rapport durée état haut du signal/période du signal ("duty cycle")= 40 %), suivi d'un deuxième cycle avec tr=10ns, th2=20ns, tf=10ns et tl2=10ns (rapport durée état haut du signal/période du signal ("duty cycle")= 60 %). Ceci donne un rapport cyclique variant de 60% à 40% qui est assez facilement détectable par le commutateur d'interface de la carte à puce d'abonné.

La carte à puce d'abonné détecte alors sur son contact C6 la modification du rapport cyclique et repasse dans le mode sans contact (i.e. le commutateur d'interface commute l'interface NFC utilisant le protocole S2C sur les contacts C4 et C8 tandis que le contrôleur de commutation connecte les liaisons 251, 252 avec les liaisons 243, 244 respectivement).

D'autres gestions dé l'allocation des contacts C4, C6 et C8 sont possibles selon l'invention. Elles dépendent des protocoles/interfaces utilisées pour échanger les données entre la carte à puce d'abonné, d'une part, et les autres éléments du terminal mobile (processeur d'application, module NFC, etc.), d'autre part.

A titre d'exemple, lorsque le processeur d'application communique avec la carte à puce d'abonné suivant le protocole MMC alors que le module NFC communique avec la carte suivant le protocole SWP ("Single Wire Protocole") qui ne nécessite qu'un seul fil, la mise en oeuvre décrite précédemment en relation avec les figures 4 à 6 peut être appliquée à la seule exception que le mode sans contact n'utilise cette fois-ci qu'un seul fil (par exemple suppression de la liaison 244 sur la figure 4 et transmission données entre module NFC et carte via liaisons 243 et 251).

## Revendications

1. Procédé d'allocation de contact d'une carte à puce d'abonné (300) dans un terminal mobile (100) équipé de ladite carte, le terminal mobile comprenant au moins un premier et un deuxième modules électroniques (130, 140) aptes à communiquer avec la carte à puce d'abonné (300) suivant respectivement un premier et un deuxième protocoles de communication, **caractérisé en ce que** la carte à puce d'abonné (100) est alternativement connectée au premier et au second modules électroniques (130, 140), au moins un contact (C4) de ladite carte étant sélectivement connecté audit premier module électronique (130) ou audit second module électronique (140),
et **en ce que** le deuxième module électronique (140) est un module de communication de proximité NFC, deux contacts (C4, C8) de la carte à puce d'abonné (300) étant raccordés par défaut audit module de communication de proximité NFC par un contrôleur de commutation (150).

2. Procédé selon la revendication 1, **caractérisé en ce que** la carte à puce d'abonné (300) reçoit en outre une commande pour utiliser une interface de communication (312; 313) correspondant au protocole de communication du module électronique à connecter avec ladite carte.

3. Procédé selon la revendication 1 ou 2, **caractérisé en ce que** trois contacts (C4, C6, C8) de la carte à puce d'abonné (300) sont sélectivement connectés audit premier module électronique (130) et audit deuxième module électronique (140), les trois contacts correspondant à des contacts non utilisés de la carte à puce d'abonné (300).

4. Procédé selon la revendication 2 ou 3, **caractérisé en ce que** le premier module électronique (130) est un processeur d'application utilisant un premier protocole de communication à très grande vitesse sur au moins deux fils et **en ce que** le deuxième module électronique (140) qui est un module de communication de proximité NFC utilise un deuxième protocole de communication sur au moins un fil, au moins un contact (C4) de la carte à puce d'abonné (300) étant sélectivement connecté audit processeur d'application ou audit module de communication de proximité NFC.

5. Procédé selon la revendication 4, **caractérisé en ce que** le processeur d'application (230) utilise un protocole de communication de type MMC transmettant des données sur un premier et un deuxième contacts (C4, C8) de la carte à puce d'abonné ainsi qu'un signal d'horloge sur un troisième contact (C6) de ladite carte et **en ce que** la carte à puce d'abonné (210) réagit à une variation du rapport cyclique du signal d'horloge transmis sur le troisième contact (C6) en utilisant l'interface de communication (312) correspondant au protocole de communication du module de communication de proximité NFC (240).

6. Dispositif de commutation programmable (150) dans un terminal mobile (100) comprenant une carte à puce d'abonné (300) et au moins un premier et un deuxième modules électroniques (130, 140) aptes à communiquer avec la carte à puce d'abonné (300) suivant respectivement un premier et un deuxième protocoles de communication, **caractérisé en ce que** ledit dispositif de commutation (150) est relié à ladite carte et auxdits modules électroniques et comprend des moyens pour connecter sélectivement au moins un contact (C4) de la carte à puce d'abonné (300) au premier module électronique (130) ou au deuxième module électronique (140),
et **en ce que** le deuxième module électronique (140) est un module de communication de proximité NFC, ledit dispositif de commutation (150) comprenant des moyens pour raccorder par défaut deux contacts (C4, C8) de la carte à puce d'abonné (300) audit module de communication de proximité NFC.

7. Dispositif selon la revendication 6, **caractérisé en ce qu'**il comprend en outre des moyens pour envoyer sur un contact (C6) de la carte à puce d'abonné (300) un signal de commande indiquant l'interface de communication (312; 313) à utiliser et correspondant au protocole de communication du module électronique à connecter avec la carte à puce d'abonné.

8. Dispositif selon la revendication 6 ou 7, **caractérisé en ce qu'**il est relié à trois contacts (C4, C6, C8) de la carte à puce d'abonné (300) correspondant à des contacts non utilisés de ladite carte.

9. Programme embarqué dans un dispositif de commutation programmable (150) dans un terminal mobile (100) comprenant une carte à puce d'abonné (300) et au moins un premier et un deuxième modules électroniques (130, 140) aptes à communiquer avec la carte à puce d'abonné (300) suivant respectivement un premier et un deuxième protocoles de communication, **caractérisé en ce que** ladite carte et lesdits modules électroniques sont reliés au dispositif de commutation, ledit programme comprenant des instructions pour connecter sélectivement au moins un contact (C4) de la carte à puce d'abonné (300) au premier module électronique (130) ou au deuxième module électronique (140),
et **en ce que** le deuxième module électronique (140) est un module de communication de proximité NFC, ledit programme comprenant en outre des instructions pour raccorder par défaut deux contacts (C4, C8) de la carte à puce d'abonné (300) audit module de communication de proximité NFC.

10. Programme selon la revendication 9, **caractérisé en ce qu'**il comprend des instructions pour envoyer sur un contact (C6) de la carte à puce d'abonné (300) un signal de commande indiquant l'interface de communication (312; 313) à utiliser et correspondant au protocole de communication du module électronique connecté avec la carte à puce d'abonné.

11. Terminal mobile (100) comprenant une carte à puce d'abonné (300; 210) et au moins un premier et un deuxième modules électroniques (130, 140; 230, 240) aptes à communiquer avec la carte à puce d'abonné suivant respectivement un premier et un deuxième protocoles de communication, ladite carte comprenant une pluralité de contacts (C1-C8) et au moins deux interfaces de communication (312; 313) correspondant respectivement auxdits premier et deuxième protocoles de communication,
**caractérisé en ce que** ledit terminal comprend en outre un dispositif de commutation programmable (150; 250) selon l'une des revendications 6 à 8.

## Claims

1. A contact allocation method for a subscriber smart card (300) in a mobile terminal (100) fitted with said card, the mobile terminal including at least first and second electronic modules (130, 140) suitable for communicating with the subscriber smart card (300) using respective first and second communications protocols, the method being **characterized in that** the subscriber smart card (300) being connected to the first and second electronic modules (130, 140) in alternation, with at least one contact (C4) of said card being connected selectively to said first electronic module (130) or to said second electronic module (140), and **in that** the second electronic module (140) is a near-field communication NFC module, two contacts (C4, C8) of the subscriber smart card (300) being connected by default to said near-field communication NFC by a switching controller (150).

2. A method according to claim 1, **characterized in that** the subscriber smart card (300) also receives a command to use a communications interface (312; 313) corresponding to the communications protocol of the electronic module that is to be connected with said card.

3. A method according to claim 1 or claim 2, **characterized in that** three contacts (C4, C6, C8) of the subscriber smart card (300) are selectively connected to said first and said second electronic modules (130, 140), the three contacts corresponding to unused contacts of the subscriber smart card (300).

4. A method according to claim 2 or claim 3, **characterized in that** the first electronic module (130) is an application processor using a first very high speed communications protocol on at least two wires, and **in that** the second electronic module (140) which is a near-field communication NFC module uses a second communication protocol on at least one wire, at least one contact (C4) of the subscriber smart card (300) being connected selectively to said application processor or to said near-field communication module NFC.

5. A method according to claim 4, **characterized in that** the application processor (230) uses an MMC type communications protocol transmitting data via first and second contacts (C4, C8) of the subscriber smart card and a clock signal via a third contact (C6) of said card, and **in that** the subscriber smart card (210) responds to a variation in the duty ratio of the clock signal transmitted via the third contact (C6) by using the communications interface (312) corresponding to the communications protocol of the near-field communication (NFC) module (240).

6. A programmable switching device (150) in a mobile terminal (100) including a subscriber smart card (300) and at least first and second electronic modules (130, 140) suitable for communicating with the subscriber smart card (300) using respective first and second communications protocols, the device being **characterized in that** it is connected to said card and to said electronic modules, and includes means for selectively connecting at least one contact (C4) of the subscriber smart card (300) to the first electronic module (130) or to the second electronic module (140), and **in that** the second electronic module (140) is a near-field communication NFC module, said switching device (150) including means for connecting by default two contacts (C4, C8) of the subscriber smart card (300) to said near-field communication NFC module.

7. A device according to claim 6, **characterized in that** it further includes means for sending a command signal via a contact (C6) of the subscriber smart card (300) indicating which communications interface (312; 313) to use, corresponding to the communications protocol of the electronic module for connection to the subscriber smart card.

8. A device according to claim 6 or claim 7, **characterized in that** it is connected to three contacts (C4, C6, C8) of the subscriber smart card (300) corresponding to unused contacts of said card.

9. A program embedded in a programmable switching device (150) in a mobile terminal (100) that includes a subscriber smart card (300) and at least first and second electronic modules (130, 140) suitable for communicating with the subscriber smart card (300) using respective first and second communications protocols, the program being **characterized in that** said card and said electronic modules are connected to the switching device, said program including instructions for connecting at least one contact (C4) of the subscriber smart card (300) selectively to the first electronic module (130) or to the second electronic module (140), and **in that** the second electronic module (140) is a near-field communication NFC module, said program further including instructions for connecting by default two contacts (C4, C8) of the subscriber smart card (300) to said near-field communication NFC module.

10. A program according to claim 9, **characterized in that** it includes instructions for sending a command signal via a contact (C6) of the subscriber smart card (300) indicating which communications interface (312; 313) to use and corresponding to the communications protocol of the electronic module connected to the subscriber smart card.

11. A mobile terminal (100) including a subscriber smart card (300; 210) and at least first and second electronic modules (130, 140; 230, 240) suitable for communicating with the subscriber smart card using respective first and second communications protocols, said card having a plurality of contacts (C1-C8) and at least two communication interfaces (312, 313) respectively corresponding to said first and second communication protocols, **characterized in that** said terminal further including a programmable switching device (150; 250) according to any one of claims 6 to 8.

## Patentansprüche

1. Verfahren zur Zuweisung eines Kontakts einer Teilnehmerchipkarte (300) in einem mit der Karte ausgestatteten mobilen Endgerät (100), wobei das mobile Endgerät wenigstens ein erstes und ein zweites elektronisches Modul (130, 140) umfaßt, die geeignet sind, mit der Teilnehmerchipkarte (300) entsprechend einem ersten bzw. einem zweiten Kommunikationsprotokoll zu kommunizieren, **dadurch gekennzeichnet, daß** die Teilnehmerchipkarte (300) abwechselnd mit dem ersten und mit dem zweiten elektronischen Modul (130 140) verbunden ist, wobei wenigstens ein Kontakt (C4) der Karte selektiv mit dem ersten elektronischen Modul (130) oder mit dem zweiten elektronischen Modul (140) verbunden ist, und daß das zweite elektronische Modul (140) ein Nahfeldkommunikationsmodul NFC ist, wobei zwei Kontakte (C4, C8) der Teilnehmerchipkarte (300) standardmäßig über einen Schaltcontroller (150) mit dem Nahfeldkommunikationsmodul NFC verbunden sind.

2. Verfahren nach Anspruch 1, **dadurch gekennzeichnet, daß** die Teilnehmerchipkarte (300) ferner einen Befehl empfängt, um eine Kommunikationsschnittstelle (312; 313) zu verwenden, die dem Kommunikationsprotokoll des mit der Karte zu verbindenden elektronischen Moduls entspricht.

3. Verfahren nach Anspruch 1 oder 2, **dadurch gekennzeichnet, daß** drei Kontakte (C4, C6, C8) der Teilnehmerchipkarte (300) selektiv mit dem ersten elektronischen Modul (130) und mit dem zweiten elektronischen Modul (140) verbunden sind, wobei die drei Kontakte nicht genutzten Kontakten der Teilnehmerchipkarte (300) entsprechen.

4. Verfahren nach Anspruch 2 oder 3, **dadurch gekennzeichnet, daß** das erste elektronische Modul (130) ein Anwendungsprozessor ist, der ein erstes Hochgeschwindigkeits-Kommunikationsprotokoll auf wenigstens zwei Drähten verwendet und daß das zweite elektronische Modul (140), das ein Nahfeldkommunikationsmodul NFC ist, ein zweites Kommunikationsprotokoll auf wenigstens einem Draht verwendet, wobei wenigstens ein Kontakt (C4) der Teilnehmerchipkarte (300) selektiv mit dem Anwendungsprozessor oder mit dem Nahfeldkommunikationsmodul NFC verbunden ist.

5. Verfahren nach Anspruch 4, **dadurch gekennzeichnet, daß** der Anwendungsprozessor (230) ein Kommunikationsprotokoll vom Typ MMC verwendet, das Daten auf einen ersten und einen zweiten Kontakt (C4, C8) der Teilnehmerchipkarte sowie ein Taktsignal auf einen dritten Kontakt (C6) der Karte überträgt, und daß die Teilnehmerchipkarte (210) auf eine Änderung des zyklischen Verhältnisses des auf den dritten Kontakt (C6) übertragenen Taktsignals unter Verwendung der dem Kommunikationsprotokoll des Nahfeldkommunikationsmoduls NFC (240) entsprechenden Kommunikationsschnittstelle (312) reagiert.

6. Programmierbare Schaltvorrichtung (150) in einem mobilen Endgerät (100) mit einer Teilnehmerchipkarte (300) und wenigstens einem ersten und einem zweiten elektronischen Modul (130, 140), die geeignet sind, mit der Teilnehmerchipkarte (300) entsprechend einem ersten bzw. einem zweiten Kommunikationsprotokoll zu kommunizieren, **dadurch gekennzeichnet, daß** die Schaltvorrichtung (150) mit der Karte und mit den elektronischen Modulen verbunden ist und Mittel umfaßt, um selektiv wenigstens einen Kontakt (C4) der Teilnehmerchipkarte (300) mit dem ersten elektronischen Modul (130) oder mit dem zweiten elektronischen Modul (140) zu verbinden, und daß das zweite elektronische Modul (140) ein Nahfeldkommunikationsmodul NFC ist, wobei die Schaltvorrichtung (150) Mittel umfaßt, um zwei Kontakte (C4, C8) der Teilnehmerchipkarte (300) standardmäßig mit dem Nahfeldkommunikationsmodul NFC zu verbinden.

7. Vorrichtung nach Anspruch 6, **dadurch gekennzeichnet, daß** sie ferner Mittel umfaßt, um auf einen Kontakt (C6) der Teilnehmerchipkarte (300) ein Befehlssignal zu senden, das die zu verwendende und dem Kommunikationsprotokoll des mit der Teilnehmerchipkarte zu verbindenden elektronischen Moduls entsprechende Kommunikationsschnittstelle (312; 313) angibt.

8. Vorrichtung nach Anspruch 6 oder 7, **dadurch gekennzeichnet, daß** sie mit drei Kontakten (C4, C6, C8) der Teilnehmerchipkarte (300) verbunden ist, die nicht genutzten Kontakten der Karte entsprechen.

9. Programm in einer programmierbaren Schaltvorrichtung (150) in einem mobilen Endgerät (100), das eine Teilnehmerchipkarte (300) sowie wenigstens ein erstes und ein zweites elektronisches Modul (130, 140) umfaßt, die geeignet sind, mit der Teilnehmerchipkarte (300) entsprechend einem ersten bzw. einem zweiten Kommunikationsprotokoll zu kommunizieren, **dadurch gekennzeichnet, daß** die Karte und die elektronischen Module mit der Schaltvorrichtung verbunden sind, wobei das Programm Anweisungen enthält, um wenigstens einen Kontakt (C4) der Teilnehmerchipkarte (300) selektiv mit dem ersten elektronischen Modul (130) oder mit dem zweiten elektronischen Modul (140) zu verbinden, und daß das zweite elektronische Modul (140) ein Nahfeldkommunikationsmodul NFC ist, wobei das Programm ferner Anweisungen umfaßt, um zwei Kontakte (C4, C8) der Teilnehmerchipkarte (300) standardmäßig mit dem Nahfeldkommunikationsmodul NFC zu verbinden.

10. Programm nach Anspruch 9, **dadurch gekennzeichnet, daß** es Anweisungen umfaßt, um auf einen Kontakt (C6) der Teilnehmerchipkarte (300) ein Befehlssignal zu senden, das die zu verwendende und dem Kommunikationsprotokoll des mit der Teilnehmerchipkarte verbundenen elektronischen Moduls entsprechende Kommunikationsschnittstelle (312; 313) angibt.

11. Mobiles Endgerät (100), das eine Teilnehmerchipkarte (300; 210) sowie wenigstens ein erstes und ein zweites elektronisches Modul (130, 140; 230, 240) umfaßt, die geeignet sind, mit der Teilnehmerchipkarte entsprechend einem ersten bzw. einem zweiten Kommunikationsprotokoll zu kommunizieren, wobei die Karte eine Vielzahl von Kontakten (C1-C8) sowie wenigstens zwei Kommunikationsschnittstellen (312; 313) umfaßt, die dem ersten bzw. dem zweiten Kommunikationsprotokoll entsprechen, **dadurch gekennzeichnet, daß** das Endgerät ferner eine programmierbare Schaltvorrichtung (150; 250) nach einem der Ansprüche 6 bis 8 umfaßt.
